# EUROPÄISCHE PATENTSCHRIFT

(11) **EP 2 316 155 B1**
(45) Veröffentlichungstag und Bekanntmachung des Hinweises auf die Patenterteilung: **15.07.2015**
(21) Anmeldenummer: 09781011.3
(22) Anmeldetag: 24.07.2009
(51) Int. Cl.: H02J 7/34, H02J 7/35

(54) **VORRICHTUNG UND VERFAHREN ZUR ERZEUGUNG, SPEICHERUNG UND ÜBERTRAGUNG VON ELEKTRISCHER ENERGIE**
DEVICE AND METHOD FOR THE GENERATION, STORAGE, AND TRANSMISSION OF ELECTRIC ENERGY
DISPOSITIF ET PROCÉDÉ POUR LA PRODUCTION, LE STOCKAGE ET LA TRANSMISSION D'ÉNERGIE ÉLECTRIQUE

(30) Priorität: 29.08.2008 DE 102008044902
(43) Veröffentlichungstag der Anmeldung: 04.05.2011
(73) Patentinhaber: Siemens Aktiengesellschaft, 80333 München (DE)
(72) Erfinder: BÖCKERMANN, Jens, 70180 Stuttgart (DE); HEINBOCKEL, Stefan, 81737 München (DE)
(86) Internationale Anmeldenummer: PCT/EP2009/059533
(87) Internationale Veröffentlichungsnummer: WO 2010/023044

(56) Entgegenhaltungen:
- EP-A- 1 542 099
- WO-A-02/15363
- WO-A-2005/091462
- WO-A-2007/082168
- DE-A1- 19 913 627
- JP-A- 2003 158 831
- US-A1- 2003 117 111
- US-A1- 2007 096 564

## Beschreibung

Die Erfindung betrifft eine Vorrichtung zur Erzeugung, Speicherung und Übertragung von elektrischer Energie gemäß dem Oberbegriff des Anspruches 1. Die Erfindung betrifft weiterhin ein Verfahren zur Erzeugung, Speicherung und Übertragung von elektrischer Energie gemäß dem Oberbegriff des Anspruches 11.

Aus dem Stand der Technik sind Anwendungen bekannt, welche unabhängig von einem Stromnetz betreibbar sind. Derartige Anwendungen eignen sich insbesondere zu einer Nutzung in weit entfernten und/oder schwer zugänglichen Gegenden, beispielsweise bei Sensoranwendungen. Zur Versorgung dieser Anwendungen mit elektrischer Energie können diese beispielsweise so genannte Energy-Harvesting-Bauelemente umfassen. Energy Harvesting bezeichnet dabei die Wandlung von Energie aus ambienten Quellen wie Umgebungstemperatur, Licht, Vibration oder Luftströmung. Da mittels dieser Energie-Harvesting-Bauelemente aufgrund eines unstetigen Vorhandenseins der ambienten Quellen keine dauerhafte Energieerzeugung möglich ist, weisen die Anwendungen meist Speichereinheiten auf, anhand derer die von den Energie-Harvesting-Bauelementen erzeugte elektrische speicherbar ist, so dass auch bei inaktiven Energie-Harvesting-Bauelementen eine Versorgung der Anwendungen mit elektrischer Energie erzielbar ist.

Eine derartige Anwendung ist aus der WO 2007/082 168 A2 bekannt, welche eine Vorrichtung und ein Verfahren zu einem Energie-Harvesting, zur Erzeugung, Speicherung und Übertragung von Energie an eine elektrische Last, insbesondere für entfernt liegende oder unzugängliche Anwendungen, offenbart. Die Vorrichtung umfasst vorzugsweise eine oder mehrere Energiequellen und als Speichereinheiten zumindest einen Doppelschicht-Kondensator zur Versorgung der elektrischen Last sowie zumindest einen Akkumulator als Notstromversorgung. Weiterhin ist eine Steuereinheit zur Steuerung der Vorrichtung vorgesehen. Die Speicherung der Energie, d.h. ein Laden der Speichereinheiten und die Übertragung der Energie an diese, ist vorzugsweise dynamisch und variabel ausgeführt, wobei die Speichereinheiten dann aufladbar sind, wenn diese keine elektrische Energie abgeben. Zur elektrischen Aufladung des Doppelschicht-Kondensators ist eine Ladungspumpe vorgesehen, welche insbesondere elektrische Energie von leistungsarmen Energiequellen sammelt und gleichzeitig eine Übertragung dieser Energie mit einer höheren elektrischen Spannung an die elektrische Last ermöglicht. Weiterhin sind Mittel vorgesehen, anhand welcher ein Energieinhalt der Speichereinheiten überwacht wird, wobei anhand des Energieinhaltes eine Frequenz bei der Ladung dieser einstellbar ist. Zusätzlich sind auch zwei Doppelschicht-Kondensatoren elektrisch seriell oder parallel miteinander verschaltbar.

Ferner sind aus der WO 2005/091462 A1 eine Vorrichtung und ein Verfahren zum Laden einer Akkumulatorbatterie bekannt, wobei eine kapazitive kapazitive Speichereinheit mit elektrischer Energie auf eine elektrische Spannung, die höher als die Nennspannung der Akkumulatorbatterie ist, geladen wird. Bei Erreichen eines vorgegebenen Grenzwertes der Spannung der kapazitiven Speichereinheit erfolgt eine Entladung der elektrischen Energie in die Akkumulatorbatterie.

Die US 2003/0117111 A1 offenbart eine Vorrichtung und ein Verfahren zum Laden einer elektrischen Batterie aus einer elektrischen Energiequelle. In einer ersten Phase wird eine kapazitive Speichereinheit mit elektrischer Energie geladen. In einer zweiten Phase wird die kapazitive Speichereinheit von der Energiequelle getrennt und die elektrische Batterie wird mit in der kapazitiven Speichereinheit gespeicherter elektrischer Energie geladen.

Weiterhin sind aus den Dokumenten EP 1 542 099 A1, DE 199 13 627 A1 und US 2007/0096564 A1 Vorrichtungen und Verfahren bekannt, bei welchen zumindest eine Energiespeichereinheit mit elektrischer Energie einer Energiequelle geladen wird und die gespeicherte Energie einer zweiten Energiespeichereinheit zugeführt wird.

Der Erfindung liegt die Aufgabe zugrunde, eine Vorrichtung und ein Verfahren zur Erzeugung, Speicherung und Übertragung von elektrischer Energie anzugeben, welche einen kontinuierlichen Betrieb von leistungsarmen elektrischen Verbrauchern bei gleichzeitiger zumindest kurzfristiger Versorgung leistungsstarker elektrischer Verbraucher mit elektrischer Energie ermöglicht.

Hinsichtlich der Vorrichtung wird die Aufgabe erfindungsgemäß durch die im Anspruch 1 angegebenen Merkmale gelöst. Hinsichtlich des Verfahrens wird die Aufgabe erfindungsgemäß durch die im Anspruch 11 angegebenen Merkmale gelöst.

Vorteilhafte Ausgestaltungen der Erfindung sind Gegenstand der Unteransprüche.

Die Vorrichtung zur Erzeugung, Speicherung und/oder Übertragung von elektrischer Energie umfasst zumindest eine Energiequelle, wenigstens eine erste Speichereinheit und eine zweite Speichereinheit zur Speicherung der Energie sowie eine Steuereinheit. Zur elektrischen Aufladung der ersten Speichereinheit ist dieser elektrische Energie der zweiten Speichereinheit zuführbar. Somit sind in vorteilhafter Weise auch Speichereinheiten aufladbar, welche einen vorgegebenen Mindestladestrom zur elektrischen Ladung benötigen.

Erfindungsgemäß sind die Energiequelle und die Speichereinheiten weiterhin mit elektrischen Verbrauchern einer dezentralen und autarken Einrichtung verbunden, wobei als Kommunikationseinheiten ausgebildeten leistungsstarken elektrischen Verbrauchern (3) die elektrische Energie mittels der ersten Speichereinheit (4) und als Sensoren ausgebildeten leistungsarmen elektrischen Verbrauchern (2) mittels der zweiten Speichereinheit (5) zuführbar ist, wobei eine Speicherkapazität der zweiten Speichereinheit geringer als die der ersten Speichereinheit ist.

Hieraus folgt in vorteilhafter Weise, dass als Sensoren ausgebildete elektrische Verbraucher mit einem geringen Energiebedarf sehr schnell einsatzbereit sind, da aufgrund der geringen Speicherkapazität und einer daraus folgenden schnellen Ladezeit der zweiten Speichereinheit frühzeitig eine für den Betrieb der Sensoren notwendige Spannungshöhe erzielbar ist. Somit ist es weiterhin möglich, dass mittels der Sensoren erfasste Daten, beispielsweise Umweltdaten, mittels der Kommunikationseinheiten an eine Zentrale übertragbar sind.

Bei der Energiequelle handelt es sich vorzugsweise um ein Energie-Harvesting-Bauelement, welches eine autarke Versorgung von elektrischen, insbesondere entfernten und schwer zugänglichen Anwendungen ermöglicht.

Da das Energie-Harvesting-Bauelement lediglich eine geringe elektrische Leistung aufweist, ist die erzeugte elektrische Energie zunächst der zweiten Speichereinheit, insbesondere einem Elektrolyt-Kondensator, bei welchem kein Mindestladestrom zur Ladung erforderlich ist, zuführbar, wobei die Steuereinheit gemäß einer besonders vorteilhaften Weiterbildung der Erfindung eine Ladeschaltung umfasst, mittels welcher die Zuführung der elektrischen Energie in die zweite Speichereinheit und von dieser in die erste Speichereinheit steuerbar ist. Dabei sind insbesondere der Ladestrom und/oder eine Ladespannung steuerbar, so dass eine Speicherung der elektrischen Energie in der ersten Speichereinheit sichergestellt ist.

Die erste Speichereinheit und die zweite Speichereinheit sind gemäß einer Ausgestaltung der Erfindung verschiedenartig, wobei die erste Speichereinheit anstelle eines herkömmlichen Akkumulators vorzugsweise ein Doppelschicht-Kondensator ist, welcher eine sehr hohe Energiedichte aufweist, so dass geringe Einbauräume erforderlich sind.

Aufgrund der Ausführung der ersten Speichereinheit als Doppelschicht-Kondensator und der zweiten Speichereinheit als Elektrolyt-Kondensator sind in vorteilhafter Weise keine Akkumulatoren zur Speicherung der elektrischen Energie erforderlich, so dass eine Verlängerung der Lebensdauer der Vorrichtung erzielbar ist. Weiterhin haben auch Temperatureinflüsse nur einen geringen Einfluss auf die Lebensdauer der Kondensatoren. Zudem sind die Kondensatoren für eine sehr große Anzahl von Lade- und Entladezyklen ausgelegt. Weiterhin weisen Kondensatoren gegenüber Akkumulatoren als Energiespeicher den besonderen Vorteil auf, dass sie weniger Giftstoffe als diese enthalten und deshalb einfacher entsorgbar sind.

Um leistungsarme elektrische Verbraucher an der zweiten Speichereinheit bei verschiedenen Ladezuständen dieser zu betreiben, ist ein Spannungsregler vorgesehen, anhand dessen eine Spannungshöhe zum Betrieb eines leistungsarmen elektrischen Verbrauchers automatisch einstellbar ist.

In einer besonders vorteilhaften Weiterbildung der Erfindung umfasst die Ladeschaltung einen Schaltregler zum Laden der zweiten Speichereinheit, wobei der Schaltregler eine getaktete Stromquelle ist. Diese weist einen sehr hohen Wirkungsgrad auf und ermöglicht es, dass der Doppelschicht-Kondensator auf eine höhere elektrische Spannung als der Elektrolytkondensator aufladbar ist, so dass eine Speicherung zusätzlicher Energie möglich ist. Weiterhin ist der ersten Speichereinheit, d.h. insbesondere der Doppelschicht-Kondensator, und/oder der zweiten Speichereinheit bei einer Energieentnahme gleichzeitig elektrische Energie zuführbar.

Ferner ist eine Erfassungseinheit vorgesehen, anhand derer ein Ladezustand der Speichereinheiten, insbesondere der zweiten Speichereinheit, erfassbar ist. Somit ist es in gewinnbringender Weise möglich, dass stets ausreichend viel elektrische Energie zum Betrieb von leistungsarmen elektrischen Verbrauchern zur Verfügung steht.

Zusätzlich ist die Vorrichtung zur Erzeugung, Speicherung und/oder Übertragung von elektrischer Energie zu einer Verwendung zur elektrischen Versorgung von dezentralen Einrichtungen, insbesondere Steuergeräten, Sensoren, Sensornetzwerken, Sendern, Empfängern, Aggregaten und/oder Antrieben vorgesehen, so dass ein unabhängiger Betrieb dieser Einrichtungen von Stromnetzen möglich ist.

Zusammenfassend ermöglichen die erfindungsgemäße Vorrichtung und das erfindungsgemäße Verfahren sowie Ausgestaltungen dieser einen kontinuierlichen Betrieb der leistungsarmen elektrischen Verbraucher bei gleichzeitiger zumindest kurzfristiger Versorgung der leistungsstarken elektrischen Verbraucher mit elektrischer Energie. Aufgrund der Auf teilung der Speichereinheiten ist genügend Energie mit einem notwendigen Mindestspannungspegel bereitstellbar.

Ausführungsbeispiele der Erfindung werden im Folgenden anhand einer Zeichnung näher erläutert. Dabei zeigt:

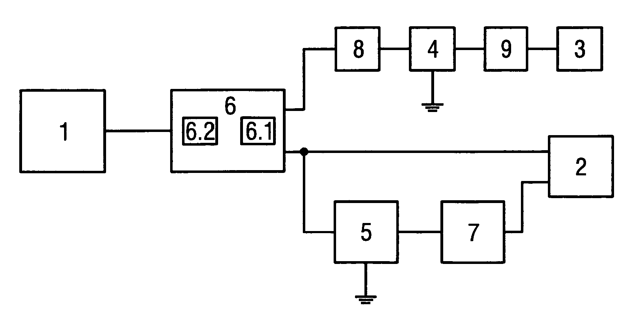

- FIG 1: schematisch ein Blockschaltbild einer Vorrichtung zur Erzeugung, Speicherung und/oder Übertragung von elektrischer Energie, umfassend zumindest eine Energiequelle, welche als Energie-Harvesting-Element ausgebildet ist.

In der einzigen FIG 1 ist eine Vorrichtung zur Erzeugung, Speicherung und/oder Übertragung von elektrischer Energie, umfassend zumindest eine Energiequelle 1, welche als Energie-Harvesting-Element ausgebildet ist, dargestellt. Im Folgenden werden sowohl die erfindungsgemäße Vorrichtung als auch das erfindungsgemäße Verfahren sowie vorteilhafte Ausgestaltungen dieser anhand der FIG 1 beschrieben.

Die Vorrichtung ist dabei insbesondere für Anwendungen vorgesehen, welche sich in schwer zugänglichen Gegenden befinden und unabhängig von einem Stromnetz sind.

Bei der Energiequelle 1, d.h. dem Energie-Harvesting-Element, kann es sich beispielsweise um eine Solarzelle, eine piezoelektrische Anordnung, einen thermoelektrischen Generator oder weitere denkbare Energiequellen handeln, welche aus ambienten Quellen wie Umgebungstemperatur, Licht, Vibration oder Luftströmung elektrische Energie erzeugen. In einem nicht näher dargestellten Ausführungsbeispiel der Erfindung sind mehrere Energiequellen 1 vorgesehen, wobei die Energiequellen 1 vorzugsweise aus verschiedenen ambienten Quellen elektrische Energie erzeugen. Somit ist die Wahrscheinlichkeit, dass keine elektrische Energie erzeugbar ist, weil keine ambiente Quelle zur Verfügung steht, verringert.

Da Energie-Harvesting-Elemente im Allgemeinen eine geringe entnehmbare elektrische Leistung erzeugen, eignet sich diese insbesondere für Anwendungen mit einem geringen elektrischen Energiebedarf bzw. einer geringen elektrischen Leistungsaufnahme. Dabei kommen insbesondere Sensoranwendungen, beispielsweise zur Erfassung von Umweltdaten, in Betracht.

Die Vorrichtung umfasst deshalb weiterhin als leistungsarmen elektrischen Verbraucher 2 einen oder mehrere Sensoren, bei welchen es sich beispielsweise um Temperatursensoren, Beschleunigungssensoren, Gassensoren oder weitere Sensoren handeln kann. Diese benötigen im Betrieb nur eine geringe elektrische Leistung und sollen häufig unabhängig von einem Stromnetz betrieben werden, da eine Verkabelung zur Energieversorgung z.B. in Industrieanlagen in großer Stückzahl nicht erwünscht ist.

Weiterhin ermöglicht die autarke Versorgung der Sensoren mit elektrischer Energie, dass diese auch in schwer zugänglichen Gebieten, beispielsweise in Erdbebenregionen, mit elektrischer Energie versorgbar sind.

Bei einer derartigen Anwendung der Vorrichtung zur Versorgung einer Anordnung zur Erfassung von Erdbeben mit elektrischer Energie sind eine Vielzahl von Sensoren, insbesondere Erschütterungssensoren, bzw. Sensornetzwerke mittels der Energiequelle 1 unabhängig von einem Stromnetz mit elektrischer Energie versorgbar. Die Erschütterungssensoren sind dabei vorzugsweise derart angeordnet, dass eine Kommunikation, d.h. ein Datenaustausch zwischen diesen möglich ist, so dass bei einer Detektion einer Erschütterung von mehreren Sensoren beispielsweise ein Alarm auslösbar ist.

Des Weiteren eignet sich Vorrichtung auch zur elektrischen Versorgung von Anordnungen zur Überwachung anderer Umweltparameter, beispielsweise zum Messen einer Wasserqualität in Gewässern oder zu einer Detektion von Waldbränden. Aufgrund einer Energieversorgung derartiger Anordnungen mittels der Vorrichtung zur Erzeugung, Speicherung und/oder Übertragung von elektrischer Energie ist in vorteilhafter Weise eine zuverlässige Funktion und elektrische Versorgung über sehr lange Zeiträume, insbesondere mehrere Jahre, realisierbar.

Ein weiterer möglicher Einsatzzweck ist die Verwendung der Vorrichtung zur Energieversorgung von elektrischen Unterhaltungsgeräten, beispielsweise von Fernsehapparaten oder Musikanlagen. Hierbei könnte bevorzugt ein Thermogenerator zu einer Umwandlung von einer Handwärme eines Benutzers in elektrische Energie vorgesehen sein und bei Betätigung einer Taste freigegeben wird, so dass üblicherweise verwendete Batterien oder Akkumulatoren zur Energieversorgung entfallen können.

Zur Auswertung der von den Sensoren erfassten Daten, beispielsweise in einer Zentrale, umfasst die Vorrichtung als leistungsstarken elektrischen Verbraucher 3 weiterhin zumindest eine Kommunikationseinheit, anhand derer die erfassten Daten an die Zentrale übermittelbar sind. Als Kommunikationseinheit sind je nach Anwendung verschiedene Datenübertragungssysteme und/oder -standards, wie beispielsweise GSM (Global System for Mobile Communications), WLAN (Wireless Local Area Network) oder weitere, insbesondere Funknetze, verwendbar.

Da jedoch die ambienten Quellen, wie z.B. Sonnenlicht oder Wind, nicht stetig sind, ist mittels der Energie-Harvesting-Bauelemente keine dauerhafte Energieerzeugung möglich. Aus diesem Grund umfasst die Vorrichtung zusätzlich eine erste Speichereinheit 4 und eine zweite Speichereinheit 5, in welchen die mittels der Energiequelle 1, d.h. dem Energie-Harvesting-Bauelement erzeugte elektrische Energie speicherbar ist.

Bei den Speichereinheiten 4 und 5 handelt es sich um Kondensatoren, wobei die erste Speichereinheit 4 ein Doppelschicht-Kondensator ist. Dieser weist eine sehr hohe Energiedicht und somit eine hohe elektrische Kapazität auf. Die zweite Speichereinheit 5 ist ein Elektrolyt-Kondensator.

Die Kondensatoren weisen gegenüber Akkumulatoren als elektrische Speichereinheiten vor allem eine erhöhte Lebensdauer auf und führen deshalb zu einer hohen Zuverlässigkeit der Vorrichtung und einem geringen Wartungsaufwand, welche für die bereits beschriebenen Anwendung in schwer zugänglichen Gebieten sehr vorteilhaft sind. Weiterhin zeichnen sich die Kondensatoren durch eine geringe Temperaturabhängigkeit aus und erfordern im Vergleich weniger aufwendige Ladeschaltungen und -verfahren.

Die beiden Speichereinheiten 4 und 5 weisen unterschiedliche Speicherkapazitäten auf, wobei die zweite Speichereinheit 5, d.h. der Elektrolyt-Kondensator, eine geringere Speicherkapazität als die erste Speichereinheit 4, d.h. der Doppelschicht-Kondensator, aufweist.

Der zweiten Speichereinheit 5 wird gemäß des erfindungsgemäßen Verfahrens die mittels der Energiequelle 1 erzeugte elektrische Energie direkt zugeführt und in dieser gespeichert.

Für dieses Laden der zweiten Speichereinheit 5 ist eine Steuereinheit 6 vorgesehen, welche eine Ladeschaltung 6.1 umfasst, anhand derer die Zuführung der elektrischen Energie in die zweite Speichereinheit 5 steuerbar ist. Mittels der Ladeschaltung 6.1 sind insbesondere eine elektrische Spannung und ein elektrischer Strom der der Energiequelle 1 entnommen elektrischen Energie einstellbar.

Um einen Betrieb der Sensoren bei verschiedenen Ladezuständen und Spannungsniveaus der zweiten Speichereinheit 5 zu ermöglichen, ist zwischen dieser und den Sensoren ein Spannungsregler 7 angeordnet, anhand dessen eine Spannungshöhe der der zweiten elektrischen Speichereinheit 5 entnommenen elektrischen Energie einstellbar ist.

Für einen Betrieb des leistungsstarken elektrischen Verbrauchers 3, d.h. der Kommunikationseinheit, reicht die in der zweiten Speichereinheit 5 gespeicherte Energie jedoch häufig nicht aus. Aus diesem Grund umfasst die Vorrichtung die erste Speichereinheit 4, d.h. den Doppelschicht-Kondensator, welcher eine hohe Speicherkapazität aufweist.

Dieser wird mittels der Ladeschaltung 6.1 mit der in der zweiten Speichereinheit 5 gespeicherten elektrischen Energie geladen, wobei die erste Speichereinheit 4 nur dann geladen wird, wenn ein mittels einer ersten Erfassungseinheit 6.2 erfasster Mindest-Ladezustand der zweiten Speichereinheit 5 vorliegt. Dadurch ist es in vorteilhafter Weise möglich, dass in der zweiten Speichereinheit 5 stets eine für den Betrieb der Sensoren ausreichende Energiemenge vorhanden ist.

Dabei ist die Erfassungseinheit 6.2 vorzugsweise Bestandteil der Steuereinheit 6 und beispielsweise als diskret aufgebaute Überwachungsschaltung oder als Low-Power-Microcontroller ausgeführt.

Die Aufteilung der in die erste Speichereinheit 4 und die zweite Speichereinheit 5, d.h. in den Doppelschicht-Kondensator mit großer elektrischer Kapazität und den Elektrolyt-Kondensator mit geringerer elektrischer Kapazität, und die elektrische Ladung der ersten Speichereinheit 4 mit elektrischer Energie aus der zweiten Speichereinheit 5 erfolgt aus mehreren Gründen.

Zum einen ist zur elektrischen Ladung des Doppelschicht-Kondensators ein Mindestladestrom erforderlich, welcher eine Stromabgabe der Energiequelle, d.h. des Energie-Harvesting-Bauelementes, übersteigen kann. Aus diesem Grund wird die mittels der Energiequelle 1 erzeugte elektrische Energie in einem ersten Schritt des erfindungsgemäßen Verfahrens in der der zweiten Speichereinheit 5, dem Elektrolyt-Kondensator gespeichert, welcher der Einschränkung des Mindestladestromes nicht unterliegt. Bei der Umladung der elektrischen Energie in den Doppelschicht-Kondensator sind mittels der Ladeschaltung 6.1 zumindest kurzzeitig sehr viel höhere Ströme realisierbar, welche wenigstens dem Mindestladestrom entsprechen.

Dabei ist die Ladeschaltung 6.1 mit einem Schaltregler 8, welcher eine getaktete Stromquelle ist, verbunden. Diese getaktete Stromquelle weist einen hohen Wirkungsgrad auf, so dass in vorteilhafter Weise lediglich ein geringer Anteil der in der zweiten Speichereinheit 5 gespeicherten elektrischen Energie bei der Umladung in die erste Speichereinheit 4 in Verluste umgewandelt wird. Das kurzzeitige Erreichen von höheren Strömen als dem Mindestladestrom beim Umladen wird durch ein schubweises Laden der ersten Speichereinheit 4 erzielt.

Um einen Betrieb des elektrischen Verbrauchers 3 bei verschiedenen Ladezuständen und Spannungsniveaus der ersten Speichereinheit 4 zu ermöglichen, ist zwischen dieser und dem Verbraucher 3 ein Spannungsregler 9 angeordnet, anhand dessen eine Spannungshöhe der der ersten Speichereinheit 4 entnommenen Energie einstellbar ist.

Zusätzlich ermöglicht die getaktete Stromquelle, dass eine gleichzeitige Laden und Entladen der zweiten Stromquelle 5, d.h. der Elektrolyt-Kondensators, möglich ist. Somit ist der Doppelschicht-Kondensator auch dann ladbar, wenn elektrische Energie zum Laden des Elektrolyt-Kondensators aus diesem entnommen wird.

Ein weiterer Grund für die Verwendung der beiden Kondensatoren ist, dass die elektrische Spannung im Doppelschicht-Kondensator beim Ladevorgang sehr viel langsamer anwächst als im Elektrolyt-Kondensator. Für den Betrieb der leistungsarmen elektrischen Verbraucher 2 ist jedoch eine Mindestspannung erforderlich, welche sich aufgrund der geringeren Speicherkapazität des Elektrolyt-Kondensators sehr schnell in diesem einstellt.

Da die Kommunikation zwischen der Vorrichtung und der Zentrale nur relativ selten stattfindet, steht mehr Zeit zur elektrischen Aufladung des Doppelschicht-Kondensators zur Verfügung.

## Patentansprüche

1. Vorrichtung zur Erzeugung, Speicherung und/oder Übertragung von elektrischer Energie, umfassend zumindest eine Energiequelle (1), wenigstens eine erste Speichereinheit (4) und eine zweite Speichereinheit (5) zur Speicherung der Energie und eine Steuereinheit (6),
wobei die zweite Speichereinheit (5) derart elektrisch mit der ersten Speichereinheit (4) verbunden ist, dass zur elektrischen Aufladung der ersten Speichereinheit (4) dieser elektrische Energie der zweiten Speichereinheit (5) zuführbar ist,
**dadurch gekennzeichnet, dass** die Energiequelle (1) und die Speichereinheiten (4 und 5) mit elektrischen Verbrauchern (2 und 3) einer dezentralen und autarken Einrichtung verbunden sind und dass als Kommunikationseinheiten ausgebildeten leistungsstarken elektrischen Verbrauchern (3) die elektrische Energie mittels der ersten Speichereinheit (4) und als Sensoren ausgebildeten leistungsarmen elektrischen Verbrauchern (2) mittels der zweiten Speichereinheit (5) zuführbar ist, wobei eine Speicherkapazität der zweiten Speichereinheit (5) geringer als die der ersten Speichereinheit (4) ist.

2. Vorrichtung nach Anspruch 1,
**dadurch gekennzeichnet, dass** erste Speichereinheit (4) und die zweite Speichereinheit (5) verschiedenartig sind.

3. Vorrichtung nach Anspruch 1 oder 2,
**dadurch gekennzeichnet, dass** die Steuereinheit (6) eine Ladeschaltung (6.1) umfasst, mittels welcher die Zuführung der elektrischen Energie in die zweite Speichereinheit (5) und von dieser in die erste Speichereinheit (4) steuerbar ist.

4. Vorrichtung nach einem der Ansprüche 1 bis 3,
**dadurch gekennzeichnet, dass** die elektrische Energie der Energiequelle (1) der zweiten Speichereinheit (5) zuführbar ist.

5. Vorrichtung nach einem der Ansprüche 1 bis 4,
**dadurch gekennzeichnet, dass** die Energiequelle (1) ein Energie-Harvesting-Bauelement ist.

6. Vorrichtung nach einem der Ansprüche 1 bis 5,
**dadurch gekennzeichnet, dass** die erste Speichereinheit (4) ein Doppelschicht-Kondensator ist.

7. Vorrichtung nach einem der Ansprüche 1 bis 6,
**dadurch gekennzeichnet, dass** die zweite Speichereinheit (5) ein Elektrolyt-Kondensator ist.

8. Vorrichtung nach einem der Ansprüche 1 bis 7,
**dadurch gekennzeichnet, dass** ein Spannungsregler (7) vorgesehen ist, anhand dessen eine Spannungshöhe zum Betrieb eines leistungsarmen elektrischen Verbrauchers (2) automatisch einstellbar ist.

9. Vorrichtung nach einem der Ansprüche 3 bis 8,
**dadurch gekennzeichnet, dass** die Ladeschaltung (6.1) einen Schaltregler (8) zum Laden der zweiten Speichereinheit (5) umfasst, wobei der Schaltregler (8) eine getaktete Stromquelle ist.

10. Vorrichtung nach einem der Ansprüche 1 bis 9,
**dadurch gekennzeichnet, dass** eine Erfassungseinheit (6.2) vorgesehen ist, anhand derer ein Ladezustand der Speichereinheiten (4 und 5) erfassbar ist.

11. Verfahren zur Erzeugung, Speicherung und/oder Übertragung von mittels zumindest einer Energiequelle (1) erzeugter elektrischer Energie, bei dem die elektrische Energie anhand von wenigstens einer ersten Speichereinheit (4) und einer zweiten Speichereinheit (5) gespeichert wird, wobei die Erzeugung, Speicherung und/oder Übertragung mittels einer Steuereinheit (6) gesteuert wird,
wobei die mittels der Energiequelle (1) erzeugte Energie in einem ersten Schritt in der zweiten Speichereinheit (5) gespeichert wird und die erste Speichereinheit (4) in einem zweiten Schritt mittels einer Ladeschaltung (6.1) der in der zweiten Speichereinheit (5) gespeicherten elektrischen Energie geladen wird, **dadurch gekennzeichnet, dass** als Kommunikationseinheiten ausgebildeten leistungsstarken elektrischen Verbrauchern (3) einer dezentralen und autarken Einrichtung aus der ersten Speichereinheit (4) und als Sensoren ausgebildeten leistungsarmen elektrischen Verbrauchern (2) der dezentralen und autarken Einrichtung aus der zweiten Speichereinheit (5) elektrische Energie zugeführt wird, wobei eine Speicherkapazität der zweiten Speichereinheit (5) geringer als die der ersten Speichereinheit (4) ist.

12. Verfahren nach Anspruch 11,
**dadurch gekennzeichnet, dass** die erste Speichereinheit (4) bei Überschreitung eines mittels einer Erfassungseinheit (6.2) erfassten Mindest-Ladezustandes der zweiten Speichereinheit (5) geladen wird.

13. Verfahren nach einem der Ansprüche 11 oder 12,
**dadurch gekennzeichnet, dass** der ersten Speichereinheit (4) während der Entnahme von elektrischer Energie gleichzeitig elektrische Energie zugeführt wird.

14. Verfahren nach einem der Ansprüche 11 bis 13,
**dadurch gekennzeichnet, dass** der zweiten Speichereinheit (5) während der Entnahme von elektrischer Energie gleichzeitig elektrische Energie zugeführt wird.

15. Verwendung einer Vorrichtung nach einem der Ansprüche 1 bis 10 zur elektrischen Versorgung von dezentralen Einrichtungen, insbesondere Steuergeräten, Sensoren, Sensornetzwerken, Sendern, Empfängern, Aggregaten und/oder Antrieben.

## Claims

1. Device for the generation, storage and/or transmission of electrical energy, comprising at least one energy source (1), at least a first storage unit (4) and a second storage unit (5) for storing the energy and a control unit (6),
the second storage unit (5) being connected electrically to the first storage unit (4) in such a way that, in order to electrically charge the first storage unit (4), electrical energy from the second storage unit (5) can be supplied to said first storage unit (4),
**characterized in that** the energy source (1) and the storage units (4 and 5) are connected to electrical consumers (2 and 3) of a distributed and autonomous device, it being possible for the electrical energy to be supplied to high-power electrical consumers (3) in the form of communication units by means of the first storage unit (4) and to low-power electrical consumers (2) in the form of sensors by means of the second storage unit (5), a storage capacitance of the second storage unit (5) being less than that of the first storage unit (4).

2. Device according to Claim 1,
**characterized in that** the first storage unit (4) and the second storage unit (5) are of different types.

3. Device according to Claim 1 or 2,
**characterized in that** the control unit (6) comprises a charging circuit (6.1), by means of which it is possible to control the supply of electrical energy to the second storage unit (5) and from said second storage unit (5) to the first storage unit (4).

4. Device according to one of Claims 1 to 3,
**characterized in that** the electrical energy from the energy source (1) can be supplied to the second storage unit (5).

5. Device according to one of Claims 1 to 4,
**characterized in that** the energy source (1) is an energy harvesting component.

6. Device according to one of Claims 1 to 5,
**characterized in that** the first storage unit (4) is a double-layer capacitor.

7. Device according to one of Claims 1 to 6,
**characterized in that** the second storage unit (5) is an electrolyte capacitor.

8. Device according to one of Claims 1 to 7,
**characterized in that** a voltage regulator (7) is provided, by means of which it is possible for a voltage level for operating a low-power electrical consumer (2) to be set automatically.

9. Device according to one of Claims 3 to 8,
**characterized in that** the charging circuit (6.1) comprises a switching regulator (8) for charging the second storage unit (5), the switching regulator (8) being a pulsed current source.

10. Device according to one of Claims 1 to 9,
**characterized in that** a detection unit (6.2) is provided, by means of which a state of charge of the storage units (4 and 5) can be detected.

11. Method for the generation, storage and/or transmission of electrical energy generated by means of at least one energy source (1), in which method the electrical energy is stored using at least a first storage unit (4) and a second storage unit (5), the generation, storage and/or transmission being controlled by means of a control unit (6),
the energy generated by means of the energy source (1) being stored in the second storage unit (5) in a first step, and, in a second step, the first storage unit (4) being charged with the electrical energy stored in the second storage unit (5) by means of a charging circuit (6.1),
**characterized in that** electrical energy is supplied to high-power electrical consumers (3) in the form of communication units of a distributed and autonomous device from the first storage unit (4) and to low-power electrical consumers (2) in the form of sensors of the distributed and autonomous device from the second storage unit (5), a storage capacitance of the second storage unit (5) being lower than that of the first storage unit (4).

12. Method according to Claim 11,
**characterized in that** the first storage unit (4) is charged in the event of a minimum state of charge of the second storage unit (5) being exceeded, said minimum state of charge being detected by means of a detection unit (6.2).

13. Method according to one of Claims 11 or 12,
**characterized in that** electrical energy is supplied to the first storage unit (4) at the same time as electrical energy is drawn.

14. Method according to one of Claims 11 to 13,
**characterized in that** the electrical energy is supplied to the second storage unit (5) at the same time as electrical energy is drawn.

15. Use of a device according to one of Claims 1 to 10 for supplying electrical power to distributed devices, in particular control devices, sensors, sensor networks, transmitters, receivers, assemblies and/or drives.

## Revendications

1. Dispositif de production, de stockage et/ou de transport d'énergie électrique, comprenant au moins une source ( 1 ) d'énergie, au moins une première unité ( 4 ) de stockage et une deuxième unité ( 5 ) de stockage pour stocker de l'énergie et une unité ( 6 ) de commande,
dans lequel la deuxième unité ( 5 ) de stockage est reliée électriquement à la première unité ( 4 ) de stockage, de manière à ce que, pour charger électriquement la première unité ( 4 ) de stockage, de l'énergie électrique de la deuxième unité ( 5 ) de stockage peut lui être envoyée,
**caractérisé en ce que** la source ( 1 ) d'énergie et les unités ( 4 et 5 ) de stockage sont reliées à des consommateurs ( 2 et 3 ) électriques d'un dispositif décentralisé et autonome et **en ce que** l'énergie électrique peut être envoyée à des consommateurs ( 3 ) électriques de forte puissance, constitués en unités de communication, au moyen de la première unité ( 4 ) de stockage, et à des consommateurs ( 2 ) électriques de petite puissance, constitués en capteurs, au moyen de la deuxième unité ( 5 ) de stockage, une capacité de stockage de la deuxième unité ( 5 ) de stockage étant plus petite que celle de la première unité ( 4 ) de stockage.

2. Dispositif suivant la revendication 1,
**caractérisé en ce que** la première unité ( 4 ) de stockage et la deuxième unité ( 5 ) de stockage sont de type différent.

3. Dispositif suivant la revendication 1 ou 2,
**caractérisé en ce que** l'unité ( 6 ) de commande comprend un circuit ( 6.1 ) de charge, au moyen duquel l'envoi de l'énergie électrique dans la deuxième unité ( 5 ) de stockage et de celle-ci dans la première unité ( 4 ) de stockage peut être commandé.

4. Dispositif suivant l'une des revendications 1 à 3,
**caractérisé en ce que** l'énergie électrique de la source ( 1 ) d'énergie peut être envoyée à la deuxième unité ( 5 ) de stockage.

5. Dispositif suivant l'une des revendications 1 à 4,
**caractérisé en ce que** la source ( 1 ) d'énergie est un composant harvesting d'énergie.

6. Dispositif suivant l'une des revendications 1 à 5,
**caractérisé en ce que** la première unité ( 4 ) de stockage est un condensateur à couche double.

7. Dispositif suivant l'une des revendications 1 à 6,
**caractérisé en ce que** la deuxième unité ( 5 ) de stockage est un condensateur à électrolyte.

8. Dispositif suivant l'une des revendications 1 à 7,
**caractérisé en ce qu'**il est prévu un régleur ( 7 ) de tension, au moyen duquel un niveau de tension peut être réglé automatiquement pour le fonctionnement d'un consommateur ( 2 ) électrique de petite puissance.

9. Dispositif suivant l'une des revendications 3 à 8,
**caractérisé en ce que** le circuit ( 6.1 ) de charge comprend un régleur ( 8 ) de commutation pour la charge de la deuxième unité ( 5 ) de stockage, le régleur ( 8 ) de commutation étant une source de courant cadencé.

10. dispositif suivant l'une des revendications 1 à 9,
**caractérisé en ce qu'**il est prévu une unité ( 6.2 ) de détection, au moyen de laquelle un état de charge des unités ( 4 et 5 ) de stockage peut être détecté.

11. Procédé de production de stockage et/ou de transport
d'énergie électrique produite au moyen d'au moins une source ( 1 ) d'énergie, dans lequel on stocke l'énergie électrique à l'aide d'au moins une première unité ( 4 ) de stockage et d'une deuxième unité ( 5 ) de stockage, la production, le stockage et/ou la transport étant commandés au moyen d'une unité ( 6 ) de commande,
dans lequel on stocke, dans un premier stade, dans la deuxième unité ( 5 ) de stockage, l'énergie produite au moyen de la source ( 1 ) d'énergie et on charge la première unité ( 4 ) de stockage dans un deuxième stade, au moyen d'un circuit ( 6.1 ) de charge de l'énergie électrique stockée dans la deuxième unité ( 5 ) de stockage,
**caractérisé en ce que** l'on envoie de l'énergie électrique à des consommateurs ( 3 ) électriques de grande puissance, constitués en unités de communication d'un dispositif décentralisé et autonome, à partir de la première unité ( 4 ) de stockage, et à des consommateurs ( 2 ) électriques de petite puissance, constitués en capteurs du dispositif décentralisé et autonome, à partir de la deuxième unité ( 5 ) de stockage, une capacité de stockage de la deuxième unité ( 5 ) de stockage étant plus petite que celle de la première unité ( 4 ) de stockage.

12. procédé suivant la revendication 11,
**caractérisé en ce que** l'on charge la première unité ( 4 ) de stockage lorsque qu'un état de charge minimum, détecté au moyen d'une unité ( 6.2 ) de détection, de la deuxième unité ( 5 ) de stockage, est dépassé.

13. procédé suivant l'une des revendications 11 ou 12,
**caractérisé en ce que** l'on envoie de l'énergie électrique en même temps à la première unité ( 4 ) de stockage pendant le prélèvement d'énergie électrique.

14. procédé suivant l'une des revendications 11 à 13,
**caractérisé en ce que** l'on envoie à la deuxième unité ( 5 ) de stockage de l'énergie électrique en même temps que de l'énergie électrique est prélevée.

15. utilisation d'un dispositif suivant l'une des revendications 1 à 10 pour l'alimentation électrique de dispositifs décentralisés, notamment d'appareils de commande, de capteurs, de réseaux de capteurs, d'émetteurs, de récepteurs, de groupes et/ou d'entraînements.
